# EUROPÄISCHE PATENTSCHRIFT

(11) **EP 1 980 595 B1**
(45) Veröffentlichungstag und Bekanntmachung des Hinweises auf die Patenterteilung: **14.11.2012**
(21) Anmeldenummer: 08006015.5
(22) Anmeldetag: 28.03.2008
(51) Int. Cl.: C04B 26/02, C09D 167/08, C09D 167/00, C04B 26/18, C09D 5/34

(54) **Wasserverdünnbare Spachtelmasse auf Alkydharz-Basis**
Water dilutable, alkyd resin based filling paste for substrates to be varnished
Mastic pour substrats à laquer à base de résine d'alkyd diluables dans l'eau

(30) Priorität: 05.04.2007 DE 102007016595
(43) Veröffentlichungstag der Anmeldung: 15.10.2008
(73) Patentinhaber: Deutsche Amphibolin-Werke von Robert Murjahn Stiftung & Co KG, 64372 Ober-Ramstadt (DE)
(72) Erfinder: Lanzer, Robin, 64291 Darmstadt (DE); Anton, Peter, Dr., 64823 Groß-Umstadt (DE)
(74) Vertreter: Pfenning, Meinig & Partner GbR

(56) Entgegenhaltungen:
- EP-A- 1 679 166
- EP-A- 1 696 010
- CA-A1- 2 054 550
- US-A- 2 175 096
- US-A- 5 883 180
- POLLOCK M: "Beyond High-Solids Baking Enamels" METAL FINISHING, ELSEVIER, NEW YORK, NY, US, Bd. 95, Nr. 7, 1. Juli 1997 (1997-07-01), Seiten 10-12,14, XP004091581 ISSN: 0026-0576
- NEAL ROGERS: "Blending Alkyd Dispersions with Acrylic Emulsions to Achieve Low VOC Architectural Coatings" COOK COMPOSITES & POLYMERS, 21. März 2007 (2007-03-21), Seiten 1-5, XP002516637 North Kansas City

## Beschreibung

Eine sich stets verschärfende Gesetzgebung, neue Gesundheits- und Sicherheitsbestimmungen sowie ein wachsendes Umweltbewusstsein bei Planern und Konsumenten fördern im Baubereich den Einsatz von organischen Beschichtungen, die im Lösemittelgehalt stark reduziert und möglichst schadstoffarm rezeptiert sind.

Eine Übersicht über die verschiedenen Bautenbeschichtungen und ihre Anwendung findet sich z.B. in DIN 18 363 VOB Vergabe- und Vertragsordnung für Bauleistungen - Teil C: Allgemeine Technische Vertragsbedingungen für Bauleistungen (ATV) - Maler- und Lackiererarbeiten - Beschichtungen. Als Beispiele seien genannt: Innenfarben, Fassadenfarbe, Lacke, Lasuren, Bodenbeschichtungen, Kunstharzputze oder Spachtelmassen. Verschiedene Umweltsiegel wie EU-Umweltzeichen, Blauer Engel, Nordic Swan oder die "VdL-Richtlinie Verbraucherprodukte VdL-RL 11" (April 2006) fördern mit ihren spezifischen Anforderungskatalogen der Entwicklung lösemittel- und schadstoffarmer Bautenbeschichtungen. Auf legislativer Seite kommen Anforderungen insbesondere durch die nachfolgend genannten EU-Richtlinien und den daraus abgeleiteten nationalen Gesetzen:
- Die europäische Zubereitungsrichtlinie 67/548/EWG sowie ihre nachfolgenden Anpassungen bis z.Zt. aktuell 06/121/EG
- Die europäische Bauprodukte-Richtlinie 89/106/EG, die in Deutschland 1992 durch das Bauproduktegesetz (BauPG 1992) und die Novellen der Landesbauordnungen in nationales Recht umgesetzt wurden.
- Die europäische DecoPaint-Richtlinie 04/42/EG, die in Deutschland als ChemVOCFarbV in nationales Recht umgesetzt ist
- Die EU-Verordnung 1907/2006 zur Registrierung, Evaluierung und Autorisierung von Chemikalien (RE-ACH)

Dabei spielen neben der Zusammensetzung der Formulierung auch die Emissionen organischer Bestandteile aus den daraus entstandenen, gebrauchsfertigen Beschichtung eine Rolle. Zur Quantifizierung und Bewertung dieser Emissionen sind Vorgehensweisen und Messmethoden ausgearbeitet worden (vgl. z.B. E.Bagda u.a. "Emission aus Beschichtungsstoffen", Kontakt & Studium Baupraxis Bd. 478, expert-Verlag, AgBB - Bewertungsschema für VOC aus Bauprodukten, Stand Sept. 2005, Broschüre "Bauprodukte: Schadstoffe u. Gerüche bestimmen und vermeiden", Umweltbundesamt Nov. 2006). Als flüchtige organische Verbindungen (VOC) definiert die DecoPaint-Richtlinie 04/42/EG Verbindungen mit einem Siedepunkt bis 250°C bei Normaldruck (101.3 KPa). Die Bestimmung des VOC-Gehalts einer Formulierung erfolgt nach Norm ISO 11890 Teil 1 (Differenzverfahren) oder Teil 2 (gaschromatographisches Verfahren).

Die genannten Umweltsiegel, Richtlinien und gesetzlichen Rahmenbedingungen beeinflussen deutlich die Formulierung von Beschichtungen auf der Basis organischer Bindemittel wie Wandfarben, Lacke, Lasuren, Kunstharzputze und Spachtelmassen. Die Grundlagen und Bestandteile solcher Formulierungen sind dokumentiert in der Patentliteratur, den öffentlich zugänglichen Richtrezepturen von Rohstoffherstellern sowie in verschiedenen Lehrbüchern, z.B. H. Kittel "Lehrbuch der Lacke und Beschichtungen" Bd. IV W.A.Colomb-Verlag, 1976, H. Kittel "Lehrbuch der Lacke und Beschichtungen" Bd. 7, Hirzel-Verlag 2005, H. Kittel "Lehrbuch der Lacke und Beschichtungen" Bd. 8, Hirzel-Verlag 2004 oder B.Müller, U.Poth "Lackformulierung und Lackrezeptur" Vincentz-Verlag 2003.

Organische Beschichtungen beinhalten als wesentliche Bestandteile Bindemittel, Pigmente und Füllstoffe, Additive sowie Löse- bzw. Verdünnungsmittel. Die Reduzierung von Lösemitteln bzw. organischen Verdünnungsmittel in Beschichtungsstoffen trägt signifikant dazu bei, die oben genannten Vorschriften und Anforderungen zu erfüllen. Ein weiterer Beitrag liefert die geeignete Auswahl der anderen Rezepturbestandteile. Auf diese Weise kann eine günstigere Bewertung hinsichtlich Gesundheit, Sicherheit und Umweltfreundlichkeit dieser Produkte realisiert werden.

Verschiedene Strategien können genutzt werden, um die Menge an Lösemitteln in den Beschichtungen herabzusetzen. So kann durch geeignete Anpassung von Bindemitteln und anderen Formulierungskomponenten der Feststoffgehalt erhöht werden. Geeignete Rohstoffe, Methoden der Formulierung und Bewertung solcher High Solid-Systeme finden sich in der Literatur, z.B. "High Solid - Quo Vadis" Schriftenreihe VILF-Vorträge Bd. 6 (2004).

Eine andere Strategie besteht darin, wasserverdünnbare Beschichtungen zu rezeptieren. Die Verwendung von Wasser als Verdünnungsmittel bringt mehrere Vorteile mit sich. Wasser ist billig, nicht entflammbar, ungiftig und ökologisch unbedenklich. Es lässt sich leicht handhaben, lagern und transportieren. Allerdings unterscheidet es sich auch ganz wesentlich von Standardlösemitteln wie Aliphaten, Aromaten, Ester und Lactone, Aldehyde, Ketone oder Alkoholen. Diese Unterschiede erfordern andere Ansätze bei der Rezeptierung, Lagerung und Verarbeitung wässriger Beschichtungen.

Einige Schwierigkeiten seien beispielhaft genannt: Da Wasser bei 0°C gefriert, müssen wässrige Bindemittel und Beschichtungen frostfrei gelagert werden. In Ländern mit gemäßigtem bis kaltem Klima beschränkt sich die Verarbeitung wässriger Beschichtungen im Freien auf die wärmeren Monate des Jahres. Zudem wirkt sich die jeweilige Luftfeuchtigkeit stark auf das Trocknungsverhalten aus. Wässrige Medien bieten auch ideale Lebensräume für Mikroben, wodurch sich die Lagerstabilität verkürzt und der Einsatz von Topfkonservierern erforderlich wird.

Eine wesentliche Voraussetzung zur Rezeptierung wasserbasierter Beschichtungen besteht darin, dass wasserverdünnbare oder wasserlösliche Bindemittel zur Verfügung stehen. Die Historie dieser wässrigen Bindemittel beschreibt z.B. H. Kittel, "Lehrbuch der Lacke und Beschichtungen", Vol. 3, S. 93, Hirzel-Verlag 2001.

Für Bautenbeschichtungen wurden die ersten wässrigen Bindemittel auf Basis Styrol-Butadien im Jahre 1948 angeboten. Sie ersetzten schnell lösemittelbasierte Systeme, z.B. in Innenfarben. Ein weiteren Durchbruch kam in den beiden folgenden Jahrzehnten mit der Einführung von Vinylacetat- und Vinylacetat/Ethylen-Dispersionen.

Heute steht eine ganze Reihe wasserverdünnbare Bindemittel zur Verfügung, um qualitativ hochwertige und optisch ansprechende Bautenbeschichtungen zu formulieren wie z.B. Vinylacetat / Ethylen, Vinylacetat /VeoVa^{®}, Vinylacetat / VeoVa^{®}/ Acrylat, Styrolacrylate, Reinacrylate, Alkyde, modifizierte Alkyde, Silikone und Silikate.

Beispiele für solche wasserverdünnbaren Bautenbeschichtungen sind Innenfarben, Fassadenfarben, Kunstharzputze, Lacke, Lasuren oder Bodenbeschichtungen. Der Lösemittelgehalt dieser Produkte liegt in Bereichen von unter 1% bis zu ca. 10 wt%.

Lösemittelverdünnbare Bautenbeschichtungen liegen dagegen üblicherweise im Bereich von 30 - 50 wt%. High Solid-Produkte können einen Lösemittelgehalte unter 15 wt% erreichen, jedoch geht diese Eigenschaft zulasten einer guten Verarbeitung mit den im Baubereich üblichen Werkzeugen Pinsel oder Rolle; Standfestigkeit sowie Antrocknungsgeschwindigkeit sind oft nicht ausreichend.

Spachtelmassen sind nach DIN 55945 hochpigmentierte Beschichtungsstoffe, die vorwiegend zum Ausgleich von Unebenheiten des Untergrunds eingesetzt werden. Sie können rein mineralisch oder auf Basis unterschiedlicher organischer Bindemittel aufgebaut sein. Eine

Übersicht findet sich z.B. in U. Zorl (Hrsg.) "Römpp Lexikon Lacke und Druckfarben" Thieme (1998), Waldau u.a., "Lexikon der Anstrichtechnik" Bd. 2, Callwey-Verlag (1996).

Lacke sind nach DIN EN 971-1 pigmentierte Beschichtungsstoffe, die nach Auftrag auf den Untergrund schützende, dekorative oder eine spezifisch technische Eigenschaften ergeben. Durch diese Lackierung werden vor allem Untergründe wie Holz, Metall und Kunststoff gegen die Beanspruchung durch Wetter, Chemikalien oder mechanische Belastungen geschützt.

Zur Vorbereitung dieser Untergründe für die nachfolgende Lackierung werden von den Malern gegebenenfalls Spachtelungen durchgeführt. Bespiele für solche Beschichtungsaufbauten finden sich z.B. in Waldau u.a., "Lexikon der Anstrichtechnik" Bd. 2, Callwey-Verlag (1996). Dabei kommen auch heute noch bevorzugt lösemittelverdünnbare Spachtelmassen auf Basis von Öl (Ölspachtel) bzw. Alkyd (Lackspachtel) zum Einsatz. Zu ihrer Ökobilanz trägt positiv bei, dass die Ölbestandteile der Spachtel aus nachwachsenden Rohstoffen wie Leinöl, Sojaöl u. a. gewonnen werden. Insbesondere Lackspachtel sind nahezu universell einsetzbar und zeichnen sich aus durch hohe Fülle, Verbund- und Haftfestigkeit. Bei der Renovierung von lackierten Bauteilen lassen sie sich im Verbund durch Ablaugen mit Natronlauge oder Kalilauge schonend wieder entfernen, ohne das Substrat durch Abrasion zu schädigen. Eine solche schonende Entfernbarkeit ist besonders bei historischen Bauteilen (Denkmalschutz) von großer Bedeutung, aber auch bei anderen Gebäuden erwünscht.

Wegen der genannten vielseitigen Anwendbarkeit und dem guten Eigenschaftsprofil behaupten sich lösemittelhaltige Lackspachtel weiterhin am Markt, obwohl sich ansonsten wässrige Beschichtungen immer stärker durchsetzen.

Das gute Eigenschaftsprofil von Lackspachteln rührt schwerpunktsmäßig von der Vernetzung der Bindemittel durch Reaktion mit Luftsauerstoff. Diese Reaktion wird gewöhnlich durch Schwermetallsalze katalysiert. Dabei unterscheidet man zwischen Primärtrockner und Sekundärtrockner, die auch Hilfstrockner genannt werden (vgl. z.B. J.Bielemann "Lackadditive" S. 221, Wiley-VCH (1998), T. Brock et al. "Lehrbuch der Lacktechnologie", S. 186 f, Vincentz-Verlag (1998))

Primärtrockner katalysieren die Vernetzungsreaktion. Am effektivsten sind solche auf Basis von Kobalt (Kobalt-Trockner). Alternativen sind Primärtrockner, die auf Mangan, Vanadium, Eisen oder seltenen Erden aufbauen, die aber bisher nicht das Leistungsspektrum der Kobalttrockner erreichen konnten.

Kobalttrockner werden aber unter HSE-Aspekten kritisch bewertet, möglicherweise werden die Stoffe zukünftig eingestuft als giftig und karzinogen Kat. II (kann Krebs erzeugen).

Bei der katalysierten Vernetzung entstehen geruchsintensive Abspaltprodukte, die von der Beschichtung über mehrere Tage emittiert werden, insbesondere Aldehyde, Ketone sowie höhere Alkohole und Ester. Diese Mechanismen sind gut untersucht und in verschiedenen Publikationen beschrieben, z.B. L. Pel u.a., Progress in Organic Coatings 55, 105 -111 (2006), J.L.Keddle u.a., Journal of Coatings Tech. 74 (933), 113-124 (2002), J.C.S. Chang u.a., ASHRAE Trans. 104 (2), 1275-1280 (1998), W.J.Muizebelt u.a., Progress in Organic Coatings 41, 331-340 (1997). Die Abspaltprodukte tragen zur Emission der Spachtelmasse bei.
Der Einsatz von Primärtrockner macht es gewöhnlich erforderlich, der Formulierung Additive zuzusetzen, die eine Hautbildung auf der Beschichtung bei Lagerung verlangsamen bzw. verhindern. Diese Hautverhütungsmittel sind z.B. Aldoxime, Ketoxime, substituierte Phenole u.ä. (vgl. z.B. J.Bielemann "Lackadditive" S. 274ff, Wiley-VCH (1998), T. Brock et al. "Lehrbuch der Lacktechnologie", S. 187, Vincentz-Verlag (1998). Solche Hautverhütungsmittel werden nicht nur von der Beschichtung emittiert, sie sind z.T. auch unter gesundheitlichen Aspekten kritisch zu bewerten. So hat die DFG-Senatskommission zur Prüfung gesundheitsschädlicher Arbeitsstoffe in ihrer MAK- und BAT-Werte-Liste 1997 das bevorzugt eingesetzte Hautverhütungsmittel 2-Butanonoxim als krebserzeugend im Tierversuch eingestuft (Kategorie 2). Verzichtet man bei Lackspachteln auf Hautverhütungsmittel, muss die Spachtelmasse bei Lagerung im Gebinde mit einer Folie, nach Anbruch zusätzlich mit Wasser überschichtet werden.

Die Abdunstung der Lösemittelmittel aus dem Spachtel trägt maßgeblich zu den Emissionen bei, auch wenn Lackspachtel durch ihren hohen Füllgrad vergleichsweise wenig Lösemittel (ca. 10 - 16 wt%) enthalten.

Somit weisen lösemittelhaltige Lackspachtel trotz ihrer vielseitigen Anwendbarkeit und dem guten Eigenschaftsprofil deutliche Nachteile auf, wenn man die Produkte nach gesundheitlichen Gesichtspunkten bewertet. Als kritisch zu nennen sind z.B. die Menge an flüchtigen organischer Verbindungen (VOC), die Geruchsentwicklung nach Applikation und bei der chemischen Trocknung sowie der Einsatz schwermetallhaltiger Sikkative, insbesondere solche auf Kobaltbasis.

Lackspachtel auf der Basis von Acrylat-Dispersionen bieten einen Ansatzpunkt, umweltfreundlichere Formulierungen zu rezeptieren. Die Erfahrung zeigt aber, dass solche Spachtelmassen sehr schnell antrocknen und bei dünnfilmiger Applikation dazu neigen, vom Untergrund irreversibel abgerieben zu werden. Bei der Renovierung von Bauteilen lassen sie sich auch wesentlich schwerer und weniger schonend entfernen als die konventionellen Lackspachtel. Außerdem werden Acrylat-Dispersionen nahezu vollständig aus nicht nachwachsenden Rohstoffen hergestellt.

Die EP 1 696 010 A1 betrifft eine Lackzusammensetzung auf Alkydharz-Basis mit einem Gehalt an flüchtigen organischen Verbindungen (VOC) von maximal 300 g/L, sog. High Solid-Alkydharzlacke, die im Wesentlichen aus dem Alkydharz, einem Trocknungsmittel, einem Lösungsmittel, Wasser sowie weiteren Additiven besteht. Verwendung finden diese Lackzusammensetzungen als Malerlacke, Bautenlacke, Konsumlacke, Industrielacke, Maschinenlacke und/oder Fahrzeuglacke.

Die EP 1 679 166 A2 beschreibt eine Holzschutzcreme basierend auf einer aus einer Ölphase und einer Wasserphase mit einem Emulgator gebildeten Emulsionscreme, gekennzeichnet durch eine mittels einer Inline-Emulgieranlage auf einen Bereich einer Eindringkraft von + 10 g bis + 60 g und einer Klebkraft von -55 g bis -5 g eingestellte Konsistenz.

Die CA 2,054,550 betrifft eine wasserbasierte LackZusammensetzung mit ca. 10 bis 60 Gewichtsteilen eines wasserunlöslichen Lackharzes, einer effektiven Menge eines Härtungsmittels für das Harz, ca. 10 bis 30 Gewichtsteile zumindest eines mit Wasser mischbaren Lösungsmittels mit einem Hansen-Löslichkeitsparameter von mehr als 9,4 sowie einem Hansen-Wasserstoffbindungslöslichkeitsparameter von mehr als 4,5, wobei das Volumenverhältnis des Wassers zum Lösungsmittel zumindest 0,1 beträgt.

Aus der US 5,883,180 ist eine wasserbasierbare, aushärtbare Farbzusammensetzung mit einem reduzierten VOC-Gehalt bekannt, die eine Dispersion zumindest eines wasserkompatiblen, filmbildenden, quervernetzbaren Harzes; eines Lösungsmittels und/oder Kovaleszenzmittels für das Harz in Form eines Blockcopolymers sowie einen Copolyetherpolyol und ein Quervernetzungsagenz für das Harz enthält.

M. Pollock beschreibt in "Beyond High-Solids Baking Enamels", Metal Finishing, Elsevier, New York, NY, US, Bd. 95, Nr. 7, 1. Juli'1997, S. 10-15, eine Enamel-Zusammensetzung mit Alkydharz, Wasser und Füllstoff.

Ähnliche Zusammensetzungen werden von Neal Rogers in "Blending Alkyd Dispersions with Acrylic Emulsions to Achieve Low VOC Architectural Coatings", Cook Composites & Polymers, 21. März 2007, S. 1-5, beschrieben.

Angesichts der beschriebenen Vorgaben seitens Gesetzgebung, Ökolabels sowie eines wachsenden Umweltbewusstseins bei Planern und Konsumenten ist es somit Aufgabe vorliegender Erfindung, einen umweltfreundlichen, wasserbasierten Lackspachtel auf Alkydbasis zu entwickeln. Dieser Lackspachtel soll sich auszeichnen durch gute Verarbeitungseigenschaften und einfache Entfernbarkeit im Renovierungsfall. Er soll im technischen Anforderungsprofil den bekannten lösemittelhaltigen Lackspachteln entsprechen, aber nahezu frei von Schwermetallen und wenn möglich auch nahezu frei von Hautverhütungsmittel sein. Außerdem wird angestrebt, die Emissionen deutlich zu reduzieren, z.B. in Zeiträumen von 3 bzw. 28 Tagen, wie sie im AgBB - Bewertungsschema für VOC genannt werden.

Erfindungsgemäß wird somit eine Spachtelmasse mit den Merkmalen des Anspruchs 1 bereitgestellt. Dabei stellen die Unteransprüche vorteilhafte Weiterbildungen dar. Mit den Ansprüchen 22 und 23 werden Verwendungsmöglichkeiten genannt.

Erstaunlicherweise wurde gefunden, dass bei geeigneter Wahl des Alkydbindemittels hinsichtlich Öllänge und Funktionalisierung technisch hochwertige Spachtelmassen rezeptiert werden können, die nur geringe Mengen an Lösemittel enthalten sowie nahezu frei von Schwermetallen und Hautverhütungsmitteln sind. Nachfolgend werden beispielhaft die vorteilhaften Ausführungsformen beschrieben.

Die verwendeten Bindemittel beschreibt z.B. H. Kittel, "Lehrbuch der Lacke und Beschichtungen", Vol. 3, Hirzel-Verlag (2001). Beispiele für handelsübliche Produkte nennt z.B. E. Karsten "Lackrohstoff-Tabellen", 10. Auflage, Vincentz-Verlag (2000). Es handelt sich bevorzugt um Alkydharze, die in Wasser emulgiert bzw. damit verdünnt werden können. Sie können als reine Alkyde oder in chemisch modifizierter Form vorliegen, insbesondere modifiziert mit Acrylat und Polyurethan. Neben der Art und Ausmaß an chemischer Modifizierung unterscheidet man Alkydharze nach der Art der eingesetzten Öle (trocknend, halbtrocknend, nicht-trocknend) sowie ihrer Öllänge wie folgt: kurzölig < 40%, mittelölig 40 -60% sowie langölig > 60%. Die Alkydharze können als Alleinbindemittel oder auch als Mischungen verschiedener Alkydharze eingesetzt werden. Auch der Zusatz anderer wasserverdünnbarer Bindemittel wie z.B. Acrylat-, PU- oder PU-Acrylat-Hybriddispersionen ist möglich.

Gegebenenfalls können der Formulierung Härter zugesetzt werden, die mit dem Bindemittel, einem weiteren reaktiven Bindemittel oder einer Kombination aus Hauptbindemittel und reaktivem Bindemittel reagieren. Solche Formulieren bezeichnet man als 2-Komponenten-Spachtelmassen. Härter und Härtungsmechanismen beschreibt z.B. T. Brock et al. "Lehrbuch der Lacktechnologie", S. 187, Vincentz-Verlag (1998). Beispiele für handelsübliche Produkte nennt z.B. E. Karsten "Lackrohstoff-Tabellen", 10. Auflage, Vincentz-Verlag (2000) .

Weiterhin können natürliche Bindemittel zugesetzt werden, wie z.B. beschrieben in H. Kittel, "Lehrbuch der Lacke und Beschichtungen", Vol. 3, Hirzel-Verlag (2001). In diesem Zusammenhang sind insbesondere trocknende pflanzliche Öle wie z.B. Leinöl, Leinöl-Standöl, Leinöl-Holzöl-Standöl zu nennen, die zu 100% aus nachwachsenden Rohstoffen gewonnen werden.

Pigmente und Füllstoffe werden umfassend beschrieben z.B. in H. Kittel, "Lehrbuch der Lacke und Beschichtungen", Vol. 5 Hirzel-Verlag (2003). Beispiele für handelsübliche Produkte nennt z.B. O. Lückert "Pigment + Füllstoff Tabellen", 6. Auflage, Vincentz-Verlag (2002). Als Pigment kommt bevorzugt Titandioxid zum Einsatz, weitere anorganische und organische Pigmente können bei Bedarf, z.B. zur Farbgebung, eingesetzt werden. Als Füllstoffe werden bevorzugt eingesetzt: Carbonatische Füllstoffe, silikatische Füllstoffe, Schwerspat, Glaskugeln und Faserfüllstoffe, insbesondere cellulosische Fasern. Die genannte Auswahl stellt aber keine Einschränkung dar.

Verdicker und sonstige Additive beschreibt u.a. H. Kittel, "Lehrbuch für Lacke und Beschichtungen", Bd. III Verlag W.A.Colomb (1976). Beispiele für handelsübliche Produkte finden sich z.B. E. Karsten "Lackrohstoff-Tabellen", 10. Auflage, Vincentz-Verlag (2000).

Die Auswahl des geeigneten Verdickers oder Verdicker-Kombinationen ist abhängig von dem jeweils eingesetzten Bindemittel. Als gut geeignet für die wässrigen Lackspachtel erweisen sich insbesondere assoziative Acrylat-Verdicker.

Additive umfassen ein breites Feld von Substanzen und werden einer Formulierung nach DIN EN 971-1 nur in geringen Mengen zugesetzt. Bevorzugte Additive für die vorliegende Formulierung sind u.a. Netz- und Dispergiermittel, Neutralisationsmittel, Entschäumer und Entlüfter sowie Topf-Konservierungsmittel.

Die Alkyolspachtel basiert vorzugsweise auf der nachfolgend aufgeführten Rahmenrezeptur:

| **Rezeptur-Bestandteil** | **Menge [wt%]** |
|---|---|
| Bindemittel fest | 8 - 36 |
| Wasser ^{[1]} | 16 - 35 |
| Pigmente/Füllstoffe | 46 - 66 |
| Verdicker | 0 - 3 |
| Lösemittel | 0 - 5 |
| Sonstige Additive | 0.6 - 2 |
| Summe aller Bestandteile | 100.00 |

| | |
|---|---|
| ^{[1]} Als Bestandteil der Bindemittel-Formulierung oder direkt zugesetzt | |

Einige Ausführungen für die wässrigen Lackspachtel sind nachfolgend zur weiteren Veranschaulichung angeführt, sie sind aber nicht als Einschränkung zu verstehen. Die verwendeten Rohstoffe sind handelsübliche Produkte, wie sie z.B. in den bereits genannten Rohstoff-Tabellen von O. Lückert und E. Karsten aufgeführt sind.

Die Beispiele 1 bis 13 sind sog. 1-Komponenten-Spachtelmassen. Dabei wurden die Beispiele 1, 2, 3 und 7 jeweils zweifach ausgeführt, wobei bei der Variante a) jeweils auf Verwendung des Kobalt-Sikkativs verzichtet wurde. In Beispiel 4a) ist eine Möglichkeit einer Alkydharzspachtelkomposition beschrieben, die ohne Hautverhütungsmittel auskommt. Dabei hat die An- oder Abwesenheit von Sikkativen und/oder Hautverhütungsmitteln keinerlei Einfluss auf die Verarbeitbarkeit oder sonstige Eigenschaften der Spachtel.

In den nachfolgenden Beispielen 14 nicht erfindungsgemäß bis 17 nicht erfindungsgemäß wurde versucht, die Antrocknung, insbesondere in höheren Schichtdicken durch Zusatz von Härtern, z.B. Isocyanaten oder Bisphenol-Harzen zu beschleunigen. Die Härter reagieren dabei mit dem Hauptbindemittel (Beispiel 14 nicht erfindungsgemäß) oder einem reaktiven Bindemittel (Beispiel 17) oder einer Kombination aus Hauptbindemittel und reaktivem Bindemittel (Beispiele 15 nicht erfindungsgemäß, 16 nicht erfindungsgemäß). Die beschriebenen Beispiele sind somit 2-Komponenten-Spachtelmassen, bestehend aus den Komponenten Masse und Härter.

### Beispiel 1

| | **1a** | **1b** |
|---|---|---|
| **Rezeptur-Bestandteil** | **Menge [wt%]** | **Menge [wt%]** |
| Alkydemulsion (44% Öl, 40% FK, urethanisiert) | 24 | 24 |
| Leinöl, vorraffiniert | 4 | 4 |
| Neutralisierungsmittel AMP-90 | 0,2 | 0,2 |
| Propylenglykol 1.2 | 2 | 2 |
| Entschäumer auf Silikonbasis | 1 | 1 |
| Netz- und Dispergiermittel | 1,5 | 1,5 |
| Talkum | 2 | 2 |
| Calciumcarbonat (PCC) | 4 | 4 |
| Calciumcarbonat (Calcit) | 56 | 56 |
| Paraffinwachs-Emulsion | 0,4 | 0,4 |
| Verdicker (Polyether) | 1 | 1 |
| Kobalt-Sikkativ (9%, wässrig) | 0 | 0,3 |
| Wasser | 3,9 | 3,6 |
| Summe aller Bestandteile | 100,00 | 100,00 |

### Beispiel 2

| | **2a** | **2b** |
|---|---|---|
| **Rezeptur-Bestandteil** | **Menge [wt%]** | **Menge [wt%]** |
| Alkydemulsion (44% Öl, 40% FK, urethanisiert) | 22 | 22 |
| Leinöl, vorraffiniert | 3,5 | 3,5 |
| Neutralisierungsmittel AMP-90 | 0,2 | 0,2 |
| Propylenglykol 1.2 | 2 | 2 |
| Entschäumer auf Silikonbasis | 1,0 | 1,0 |
| Entschäumer auf Harnstoffbasis | 0,8 | 0,8 |
| Netz- und Dispergiermittel | 1,5 | 1,5 |
| Talkum | 2 | 2 |
| Calciumcarbonat (PCC) | 4 | 4 |
| Calciumcarbonat (Calcit) | 56 | 56 |
| Paraffinwachs-Emulsion | 0,4 | 0,4 |
| Verdicker (Schichtsilikat) | 1,2 | 1,2 |
| Hautverhütungsmittel (Butanonoxim) | 0,6 | 0,6 |
| Konservierungsmittel (Topfkonservierer) | 0,2 | 0,2 |
| Kobalt-Sikkativ (9%, wässrig) | 0 | 0,5 |
| Wasser | 4,6 | 4,1 |
| Summe aller Bestandteile | 100.00 | 100.00 |

### Beispiel 3

| | **3a** | **3b** |
|---|---|---|
| **Rezeptur-Bestandteil** | **Menge [wt%]** | **Menge [wt%]** |
| Alkydemulsion (44% Öl, 40% FK, urethanisiert) | 20 | 20 |
| Leinöl, vorraffiniert | 2,0 | 2,0 |
| Neutralisierungsmittel AMP-90 | 0,2 | 0,2 |
| Butyldiglykol | 0,5 | 0,5 |
| Entschäumer auf Silikonbasis | 0,9 | 0,9 |
| Netz- und Dispergiermittel | 0,7 | 0,7 |
| Talkum | 18 | 18 |
| Dolomit | 20 | 20 |
| Calciumcarbonat (Calcit) | 10 | 10 |
| Titandioxid | 2 | 2 |
| Paraffinwachs-Emulsion | 0,7 | 0,7 |
| Verdicker auf Cellulose-Basis | 0,2 | 0,2 |
| Verdicker (Schichtsilikat) | 1,2 | 1,2 |
| Anti-Absetzmittel (Pyrogene Kieselsäure) | 0,3 | 0,3 |
| Hautverhütungsmittel (auf Phenolbasis) | 0,2 | 0,2 |
| Konservierungsmittel (Topfkonservierer) | 0,2 | 0,2 |
| Kobalt-Sikkativ (9%, wässrig) | 0 | 0,5 |
| Wasser | 22,9 | 22,4 |
| Summe aller Bestandteile | 100.00 | 100.00 |

### Beispiel 4 (*)

| | **4a** | **4b** |
|---|---|---|
| **Rezeptur-Bestandteil** | **Menge [wt%]** | **Menge [wt%]** |
| Alkydemulsion (44% Öl, 40% FK, urethanisiert) | 19 | 19 |
| Alkydemulsion (35% Öl, 40% FK) | 5 | 5 |
| Neutralisierungsmittel AMP-90 | 0,2 | 0,2 |
| Butyldiglykol | 0,5 | 0,5 |
| Entschäumer auf Silikonbasis | 0,8 | 0,8 |
| Netz- und Dispergiermittel | 0,7 | 0,7 |
| Talkum | 17 | 17 |
| Dolomit | 19 | 19 |
| Calciumcarbonat (Calcit) | 9,5 | 9,5 |
| Schwerspat | 9,5 | 9,5 |
| Titandioxid | 2 | 2 |
| Paraffinwachs-Emulsion | 0,6 | 0,6 |
| Verdicker auf Cellulose-Basis | 0,2 | 0,2 |
| Verdicker (Schichtsilikat) | 1,1 | 1,1 |
| Anti-Absetzmittel (Pyrogene Kieselsäure) | 0,3 | 0,3 |
| Hautverhütungsmittel (auf Phenolbasis) | 0 | 0,1 |
| Konservierungsmittel (Topfkonservierer) | 0,2 | 0,2 |
| Wasser | 14,4 | 14,3 |
| Summe aller Bestandteile | 100.00 | 100.00 |

| | | |
|---|---|---|
| (*) nicht erfindungsgemäß | | |

### Beispiel 5 (*)

| **Rezeptur-Bestandteil** | **Menge [wt%]** |
|---|---|
| Alkydemulsion (33% Öl, 40% FK, acryliert) | 23 |
| Neutralisierungsmittel AMP-90 | 0,2 |
| Butyldiglykol | 0,5 |
| Entschäumer auf Silikonbasis | 0, 9 |
| Netz- und Dispergiermittel | 0,7 |
| Talkum | 14 |
| Dolomit | 12 |
| Calciumcarbonat (Calcit) | 12 |
| Schwerspat | 20 |
| Titandioxid | 2,5 |
| Mikro-Glaskugeln | 2 |
| Paraffinwachs-Emulsion | 0,7 |
| Verdicker auf Cellulose-Basis | 0,2 |
| Verdicker (Schichtsilikat) | 0,7 |
| Konservierungsmittel (Topfkonservierer) | 0,2 |
| Wasser | 10,4 |
| Summe aller Bestandteile | 100.00 |

| | |
|---|---|
| (*) nicht erfindungsgemäß | |

### Beispiel 6 (*)

| **Rezeptur-Bestandteil** | **Menge [wt%]** |
|---|---|
| Alkydemulsion (33% Öl, 42% FK, urethanisiert) | 12 |
| Neutralisierungsmittel AMP-90 | 0,2 |
| Entschäumer auf Silikonbasis | 0,9 |
| Netz- und Dispergiermittel | 0,7 |
| Talkum | 15 |
| Dolomit | 12 |
| Calciumcarbonat (Calcit) | 15 |
| Schwerspat | 20 |
| Kaolin | 8 |
| Verdicker (Schichtsilikat) | 0,5 |
| Konservierungsmittel (Topfkonservierer) | 0,2 |
| Wasser | 15,5 |
| Summe aller Bestandteile | 100.00 |

| | |
|---|---|
| (*) nicht erfindungsgemäß | |

### Beispiel 7 (*)

| | **7a** | **7b** |
|---|---|---|
| **Rezeptur-Bestandteil** | **Menge [wt%]** | **Menge [wt%]** |
| Alkydemulsion (24% Öl, 40% FK, acryliert) | 25 | 25 |
| Wässrige Polyvinylalkohol-Lösung (30% FK) | 13 | 13 |
| Talkum | 15 | 15 |
| Calciumcarbonat (Calcit) | 15 | 15 |
| Schwerspat | 19 | 19 |
| Cellulosefaser | 3,8 | 3,8 |
| Titandioxid | 3,8 | 3,8 |
| Konservierungsmittel (Topfkonservierer) | 0,2 | 0,2 |
| Kobalt-Sikkativ (9%, wässrig) | 0 | 0,2 |
| Wasser | 5,2 | 5,0 |
| Summe aller Bestandteile | 100.00 | 100.00 |

| | | |
|---|---|---|
| (*) nicht erfindungsgemäß | | |

### Beispiel 8 (*)

| **Rezeptur-Bestandteil** | **Menge [wt%]** |
|---|---|
| Alkydemulsion (24% Öl, 40% FK, acryliert) | 36 |
| Neutralisierungsmittel AMP-90 | 0,1 |
| Talkum | 15 |
| Calciumcarbonat (Calcit) | 15 |
| Schwerspat | 20 |
| Cellulosefaser | 3,8 |
| Titandioxid | 4,0 |
| Konservierungsmittel (Topfkonservierer) | 0,2 |
| Wasser | 5,9 |
| Summe aller Bestandteile | 100.00 |

| | |
|---|---|
| (*) nicht erfindungsgemäß | |

### Beispiel 9 (*)

| **Rezeptur-Bestandteil** | **Menge [wt%]** |
|---|---|
| Alkydemulsion (20% Öl, 40% FK, urethanisiert) | 36 |
| Neutralisierungsmittel AMP-90 | 0,1 |
| Entschäumer auf Silikonbasis | 0,3 |
| Talkum | 16 |
| Calciumcarbonat (Calcit) | 16 |
| Schwerspat | 20 |
| Cellulosefaser | 1,2 |
| Titandioxid | 5, 0 |
| Acrylat-Verdicker | 1,2 |
| Konservierungsmittel (Topfkonservierer) | 0,2 |
| Wasser | 4,0 |
| Summe aller Bestandteile | 100.00 |

| | |
|---|---|
| (*) nicht erfindungsgemäß | |

### Beispiel 10 (*)

| **Rezeptur-Bestandteil** | **Menge [wt%]** |
|---|---|
| Alkydemulsion (30% Öl, 44% FK, urethanisiert) | 36 |
| Neutralisierungsmittel AMP-90 | 0,1 |
| Entschäumer auf Silikonbasis | 0,3 |
| Talkum | 16 |
| Calciumcarbonat (Calcit) | 16 |
| Schwerspat | 20 |
| Cellulosefaser | 1,2 |
| Titandioxid | 5,0 |
| Acrylat-Verdicker | 1,2 |
| Konservierungsmittel (Topfkonservierer) | 0,2 |
| Wasser | 4,0 |
| Summe aller Bestandteile | 100.00 |

| | |
|---|---|
| (*) nicht erfindungsgemäß | |

### Beispiel 11 (*)

| **Rezeptur-Bestandteil** | **Menge [wt%]** |
|---|---|
| Alkydemulsion (59% Öl, 70% FK) | 23 |
| Neutralisierungsmittel AMP-90 | 0,1 |
| Entschäumer auf Silikonbasis | 0,3 |
| Talkum | 16 |
| Calciumcarbonat (Calcit) | 16 |
| Schwerspat | 20 |
| Cellulosefaser | 1,2 |
| Titandioxid | 5,0 |
| Acrylat-Verdicker | 1,2 |
| Konservierungsmittel (Topfkonservierer) | 0,2 |
| Wasser | 17,0 |
| Summe aller Bestandteile | 100.00 |

| | |
|---|---|
| (*) nicht erfindungsgemäß | |

### Beispiel 12 (*)

| **Rezeptur-Bestandteil** | **Menge [wt%]** |
|---|---|
| Alkyd, wasseremulgierbar (83% Öl, 100% FK) | 16 |
| Neutralisierungsmittel AMP-90 | 0,1 |
| Entschäumer auf Silikonbasis | 0,3 |
| Talkum | 16 |
| Calciumcarbonat (Calcit) | 16 |
| Schwerspat | 20 |
| Cellulosefaser | 1,2 |
| Titandioxid | 5,0 |
| Acrylat-Verdicker | 1,2 |
| Konservierungsmittel (Topfkonservierer) | 0,2 |
| Wasser | 24,0 |
| Summe aller Bestandteile | 100.00 |

| | |
|---|---|
| (*) nicht erfindungsgemäß | |

### Beispiel 13 (*)

| **Rezeptur-Bestandteil** | **Menge [wt%]** |
|---|---|
| Dispersion eines ölfreien Polyesters (42% FK) | 36 |
| Neutralisierungsmittel AMP-90 | 0,1 |
| Entschäumer auf Silikonbasis | 0,3 |
| Talkum | 16 |
| Calciumcarbonat (Calcit) | 16 |
| Schwerspat | 19 |
| Cellulosefaser | 1,2 |
| Titandioxid | 5,0 |
| Acrylat-Verdicker | 1,2 |
| Konservierungsmittel (Topfkonservierer) | 0,2 |
| Wasser | 5,0 |
| Summe aller Bestandteile | 100.00 |

| | |
|---|---|
| (*) nicht erfindungsgemäß | |

### Beispiel 14 (*)

| **Rezeptur-Bestandteil** | **Menge [wt%]** |
|---|---|
| Alkydemulsion (24% Öl, 40% FK, acryliert) | 34,5 |
| Neutralisierungsmittel AMP-90 | 0,1 |
| Entschäumer auf Silikonbasis | 0,3 |
| Talkum | 16 |
| Calciumcarbonat (Calcit) | 16 |
| Schwerspat | 19 |
| Cellulosefaser | 1,2 |
| Titandioxid | 5,0 |
| Acrylat-Verdicker | 1,2 |
| Konservierungsmittel (Topfkonservierer) | 0,2 |
| Wasser | 5,0 |
| Polyisocyanat, wasseremulgierbar | 1,5 |
| Summe aller Bestandteile | 100.00 |

| | |
|---|---|
| (*) nicht erfindungsgemäß | |

### Beispiel 15 (*)

| **Rezeptur-Bestandteil** | **Menge [wt%]** |
|---|---|
| Alkydemulsion (24% Öl, 40% FK, acryliert) | 31,5 |
| Hydroxyacrylat-Dispersion (5% OH, 41% FK) | 3 |
| Neutralisierungsmittel AMP-90 | 0,1 |
| Entschäumer auf Silikonbasis | 0, 3 |
| Talkum | 16 |
| Calciumcarbonat (Calcit) | 16 |
| Schwerspat | 19 |
| Cellulosefaser | 1,2 |
| Titandioxid | 5,0 |
| Acrylat-Verdicker | 1,2 |
| Konservierungsmittel (Topfkonservierer) | 0,2 |
| Wasser | 5,0 |
| Polyisocyanat, wasseremulgierbar | 1,5 |
| Summe aller Bestandteile | 100.00 |

| | |
|---|---|
| (*) nicht erfindungsgemäß | |

### Beispiel 16 (*)

| **Rezeptur-Bestandteil** | **Menge [wt%]** |
|---|---|
| Alkydemulsion (24% Öl, 40% FK, acryliert) | 31,5 |
| Alkydemulsion (Polyol, 18% Öl, 3,2% OH, 43% FK) | 3 |
| Neutralisierungsmittel AMP-90 | 0,1 |
| Entschäumer auf Silikonbasis | 0, 3 |
| Talkum | 16 |
| Calciumcarbonat (Calcit) | 16 |
| Schwerspat | 19 |
| Cellulosefaser | 1,2 |
| Titandioxid | 5,0 |
| Acrylat-Verdicker | 1,2 |
| Konservierungsmittel (Topfkonservierer) | 0,2 |
| Wasser | 5,0 |
| Polyisocyanat, wasseremulgierbar | 1,5 |
| Summe aller Bestandteile | 100.00 |

| | |
|---|---|
| (*) nicht erfindungsgemäß | |

### Beispiel 17 (*)

| **Rezeptur-Bestandteil** | **Menge [wt%]** |
|---|---|
| Alkydemulsion (24% Öl, 40% FK, acryliert) | 32,5 |
| Aminaddukt (Aminzahl 185, 50% FK) | 2 |
| Neutralisierungsmittel AMP-90 | 0,1 |
| Entschäumer auf Silikonbasis | 0, 3 |
| Talkum | 16 |
| Calciumcarbonat (Calcit) | 16 |
| Schwerspat | 19 |
| Cellulosefaser | 1,2 |
| Titandioxid | 5,0 |
| Acrylat-Verdicker | 1,2 |
| Konservierungsmittel (Topfkonservierer) | 0,2 |
| Wasser | 5,0 |
| Bisphenol A - Harz | 1,5 |
| Summe aller Bestandteile | 100.00 |

| | |
|---|---|
| (*) nicht erfindungsgemäß | |

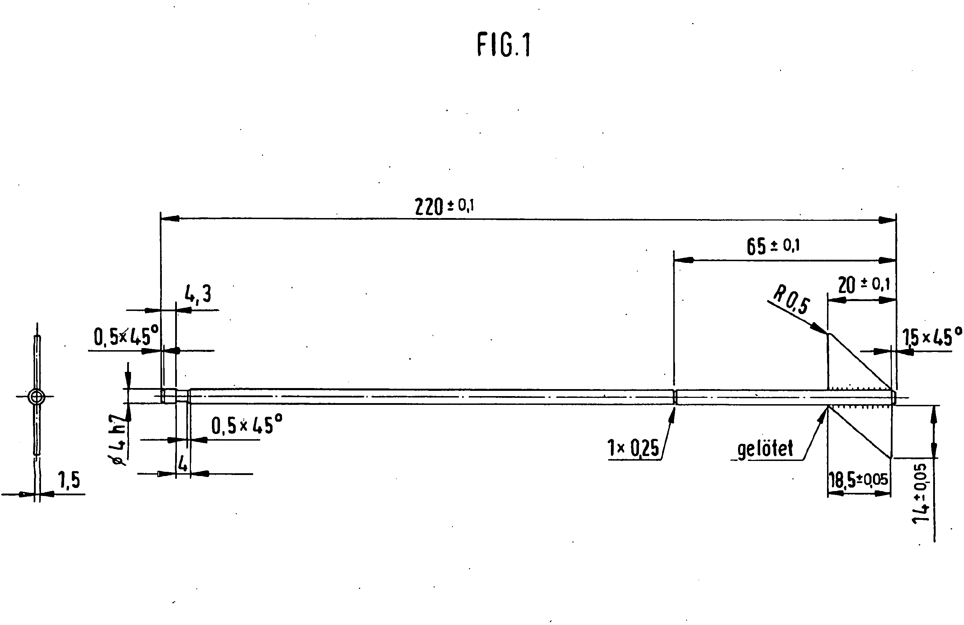

Die gefertigten und verarbeitbaren Beispiele 1 bis 12 wurden wie folgt charakterisiert:
- Verarbeitung (Auftrag und Abglätten):
   Der Auftrag erfolgte bevorzugt mit der Spachtel oder Traufel. Die Spachtelmasse wurde als Fleckspachtel in Vertiefungen eingearbeitet oder flächig abgeglättet (Flächenspachtelung). Alle Rezepturen lassen sich gut mit dem Werkzeug auftragen und abglätten.
- Viskosität
   Die Viskosität gibt die Konsistenz des Lackspachtels an und wurde mit eine Haake Viskosimeter VT 550 auf Drehzahlstufe 4 (entspricht einer Drehzahl von 22,6 U/min) bestimmt. Dabei kam ein speziell entwickelter Stiftdrehkörper nach Dr. Bagda zum Einsatz, der sich besonders für höherviskose Medien wie z.B. Spachtelmassen oder Putze eignet. Eine technische Skizze des Stiftdrehkörpers befindet sich in Figur 1. Alle in Fig. 1 gemachten Angaben sind in mm. Der Stiftdrehkörper wird in die Halterung am VT 550 eingesetzt, anschließend bis zur Markierung in die auf 20 °C ± 1 °C temperierte Probe im Prüfgefäß eingetaucht und die Messung gestartet. Der Messwert in Haake-Einheiten wird nach 1 Minute auf der Anzeigeskala des Viskosimeters abgelesen. Die Viskosität wurde so eingestellt, dass die Spachtelmasse sich gut verarbeiten läßt und gut auf senkrechten Flächen stehen bleibt.
- Offenzeit
   Die Offenzeit steht für den Zeitraum, in der die Spachtelmasse nach der Applikation noch weitgehend spurenfrei nachgearbeitet werden kann. Sie ist für alle Rezepturen lang genug, um im Bedarfsfall noch Korrekturen vornehmen zu können und kann daher als gut bewertet werden.
- Füllkraft
   Die Füllkraft steht für das Vermögen der Spachtelmasse, Unebenheiten im Untergrund auszugleichen. Sie hängt stark von der geeigneten Kornverteilung der Füllstoffe und Pigmente ab. Die Zusammensetzung dieser Rezepturbestandteile konnte bei vorgegebenem Bindemittel so ausgewählt werden, dass eine hohe Füllkraft gegeben war
- Risstendenz
   Die Risstendenz gibt wieder, in welchem Maße die Spachtelmasse beim Trocknen Risse bildet. Optimal bleibt die Oberfläche frei von Rissen. Bei vergleichbaren Schichtstärken hängt dies stark von der geeigneten Kornverteilung der Füllstoffe und Pigmente ab sowie dem Volumenverhältnis dieser Feststoffe zum Bindemittel. Die Zusammensetzung dieser Rezepturbestandteile konnte bei vorgegebenem Bindemittel so ausgewählt werden, dass sich keine Risse beim Trocknen bildeten.
- Durchtrocknung/Schleifbarkeit
   Als Zeit für die Durchtrocknung wurde ermittelt, wie schnell sich die Spachtelmasse mit Schleifpapier schleifen lässt. Die Schleifbarkeit beschreibt, wie gut sich die durchgetrocknete Spachtelmasse schleifen lässt. Der Schleifstaub soll dabei fein und von pudriger Konsistenz sein und nicht das Schleifpapier zusetzen. Die Eigenschaften hängen stark von der aufgetragenen Schichtdicke an Spachtelmasse ab.
   Bei vergleichbaren Schichtstärken schneiden die Formulierungen auf Basis von Alkyden mit niedrigerem Ölgehalt (20 - 40 wt%) besser ab als solche mit höheren Ölanteilen. Diese Formulierungen trocknen auch ohne Zusatz von Sikkativen schnell genug. Bei Lagerung bleibt die Oberfläche auch ohne Hautverhütungsmittel frei von Antrocknungen (Hautbildung).
   Besonders lange weich bleiben Formulierungen auf Basis von Langölalkyden. Eine zusätzliche Funktionalisierung des Alkydes mit Acrylat oder Polyurethan begünstigt die Durchtrocknung und Schleifbarkeit.
- Endhärte
   Die Endhärte steht für die Härte der durchgetrockneten Spachtelmasse. Sie wurde bestimmt nach 24 h durch Kratzen mit einem Nagel. Die Formulierungen auf Basis von Alkyden mit niedrigerem Ölgehalt (20 - 30 wt%) schneiden dabei besser ab als solche mit höheren Ölanteilen. Besonders lange weich bleiben Formulierungen auf Basis von Langölalkyden. Eine zusätzliche Funktionalisierung des Alkydes mit Acrylat oder Polyurethan begünstigt die Durchtrocknung und Schleifbarkeit.
- Überarbeitbarkeit
   Die Überarbeitbarkeit gibt an, wie gut sich die durchgetrocknete und geschliffene Spachtelmasse nachfolgend mit Beschichtungen wie z.B. lösemittelhaltigen Alkydlacken, wässrigen Alkydlacken oder wässrigen Acrylat- bzw. PU/Acrylatlacken überarbeiten lässt. Sie ist gewöhnlich nach einigen Stunden möglich. Ausnahme sind Formulierungen auf Basis von Langölalkyden, die lange klebrig bleiben und daher nicht überstrichen werden können.

Ausgewählte Rezepturen wurden im direkten Vergleich zu kommerziell erhältlichen Spachtelmassen auf Basis lösemittelhaltigem Alkyd sowie wässriger Acrylatdispersion verarbeitet und bewertet. Repräsentative Ergebnisse sind in den beiden nachfolgenden Tabellen zusammengefasst:

| **Rezeptur** | **Beispiel 9 (nicht erfindungsgemäß)** | **Beispiel 8 (nicht erfindungsgemäß)** | **Beispiel 10 (nicht erfindungsgemäß)** |
|---|---|---|---|
| Bindemittel | PU-modifizierte Alkydemulsion | Acrylmodifizierte Alkydemulsion | PU-modifizierte Alkydemulsion |
| Öllänge | 20% Kurzölig | 24% Kurzölig | 30 % Kurzölig |
| VOC [g/L) nach ISO 11 890 Teil 2 | 8 | 41 | 7 |
| Zusammensetzung VOC | Amine | Amine, Glykolether | Amine |
| Auftrag | Gut | Gut | Gut |
| Abglätten | Gut | Gut | Gut |
| Offenzeit | Gut | Gut | Gut |
| Risstendenz bei 100, 500 u. 1000 µm nach DIN EN ISO 4628-4; Skala: 0 (keine) bis 5 (sehr viele Risse) | 0, 2, 3 | 0,0, 1 | 1, 3, 5 |
| Trocknungszeit 1,2 mm Schichtdicke | 12 h | 12 h | 12 h |
| Trocknungszeit 0,4 mm Schichtdicke | 2 h | 2 h | 2 h |
| Trocknungszeit 0,2 mm Schichtdicke | 15 min | 10 min | 20 min |
| Schleifbarkeit nach 24 h / 1,2 mm Schichtdicke | Gut | Gut | Gut |
| Endhärte nach 24 h / 1,0 mm Nassschichtdicke nach DIN 53505 Shore D 0 = extrem weich / 100 = extrem hart | 78 Shore D | 81 Shore D | 76 Shore D |
| Überarbeitbar nach 24 h / 1,2 mm Schichtdicke | Sehr Gut | Sehr Gut | Sehr Gut |
| Ablaugbar | Ja | Ja | Ja |

| Rezeptur | Beispiel 12 nicht erfindungsgemäß | ergleich 1- lösemittelhaltiger Lackspachtel | Vergleich 2 - wässriger Acrylat-spachtel |
|---|---|---|---|
| Bindemittel | Reine Alkydemulsion | Alkydharz, lösemittelhaltig | Acryldispersion |
| Öllänge | 83% Langölig | Mittelölig | Ölfrei |
| VOC [g/L] nach ISO 11 890 Teil 2 | 5 | 210 | 54 |
| Zusammensetzung VOC | Amine | Testbenzin | Testbenzin |
| Auftrag | Gut | Gut | Mittelmäßig, etwas schwergängig |
| Abglätten | Gut | Gut | Schlecht, wird im angetrockneten Zustand leicht vom Untergrund weggerieben |
| Offenzeit | Sehr Gut | Gut | Schlecht, zieht sehr schnell an |
| Risstendenz bei 100, 500 u. 1000 µm nach DIN EN ISO 4628-4; Skala: 0 (keine) bis 5 (sehr viele Risse) | 0,0, 3 | 0,0, 3 | 0, 2, 3 |
| Risstendenz | Nein | Nein | Nein |
| Trocknungszeit 1,2 mm Schichtdicke | Mehrere Tage | Mehrere Tage | 12 h |
| Trocknungszeit 0,4 mm Schichtdicke | 8 h | 48 h | 2 h |
| Trocknungszeit 0,2 mm Schichtdicke | 4 h | 50 min | 20 min |
| Schleifbarkeit nach 24 h / 1,2 mm Schichtdicke | Nicht möglich | Mittelmäßig | Gut |
| Endhärte nach 24 h / 1,0 mm Nassschichtdickenach DIN 53505 Shore D 0 = extrem weich / 100 = extrem hart | 40 Shore D | Zu weich nicht zu bestimmen | 82 Shore D |
| Überarbeitbar nach 24 h / 1,2 mm Schichtdicke | Nicht möglich | Gut | Gut |
| Ablaugbar | Ja | Ja | Nein |

Der Vergleich zeigt, dass die untersuchten Beispiele 8 bis 10 wesentliche Verbesserungen gegenüber Alkydharzspachteln, wie sie aus dem Stand der Technik bekannt sind, bieten. Die Spachtelmasse auf Basis wässriger Alkydemulsionen zeichnen sich aus durch gute Verarbeitungseigenschaften und einfache Entfernbarkeit im Renovierungsfall. Sie entsprechen dem technischen Anforderungsprofil lösemittelhaltiger Lackspachtel. Sie sind ihnen bei geeigneter Auswahl an Alkydemulsionen sogar überlegen, da die wässrigen Formulierungen wesentlich schneller trocknen und auch frei sind von Schwermetallen und Hautverhütungsmitteln. Durch ihren deutlich geringeren Lösemittelgehalt sowie ihre Formulierung ohne Sikkative und ohne Hautverhütungsmittel emittieren die wässrigen Lackspachtel auch merklich weniger flüchtige organische Bestandteile (VOC).

Die wässrige Lackspachtel übertreffen zudem die Acrylatspachtel durch leichtere Verarbeitung, längere Offenzeit, bessere Ausziehbarkeit in dünneren Schichten und schonendere Entfernbarkeit (Ablaugen) im Renovierungsfall.

## Patentansprüche

1. Umweltfreundliche Spachtelmasse, enthaltend Bindemittel, Wasser sowie mindestens einen Füllstoff,
wobei das Bindemittel mindestens ein wasserverdünnbares und/oder wasseremulgierbares Alkydharz, ausgewählt aus mittelöligen Alkydharzen (Öllänge zwischen 40 und 60 %) und/oder kurzöligen Alkydharzen (Öllänge < 40
%), ist,
mit folgender Gesamtformulierung
| | | | |
|---|---|---|---|
| a) | Bindemittel: | 3 bis | 50 Gew.-%, |
| b) | Wasser: | 10 bis | 50 Gew.-%, |
| c) | Füllstoff: | 10 bis | 80 Gew.-%, |
| d) | Verdicker: | 0 bis | 8 Gew.-% |
| e) | Lösungsmittel: | 0 bis | 10 Gew.-%, |
| f) | weiteres Additiv: | 0 bis | 5 Gew.-%, |
wobei die Komponenten a) bis f) so zu wählen sind, dass ihre Summe 100 Gew.-% ergibt **dadurch gekennzeichnet, dass** das Bindemittel zusätzlich Öle enthält.

2. Spachtelmasse nach vorhergehendem Anspruch,
**dadurch gekennzeichnet, dass** die Öllänge des mindestens einen Alkydharzes zwischen 18 und 60 %, bevorzugt zwischen 18 und 40 %, besonders bevorzugt zwischen 20 und 30 %, weiter bevorzugt zwischen 20 und 25 % beträgt.

3. Spachtelmasse nach einem der vorhergehenden Ansprüche, **dadurch gekennzeichnet, dass** das mindestens eine Alkydharz zumindest teilweise mit Acrylsäurederivaten, Methacrylsäurederivaten, Polyurethanen und/oder Hybriden aus Acrylsäurederivaten bzw. Methacrylsäurederivaten und Polyurethanen modifiziert ist.

4. Spachtelmasse nach einem der vorhergehenden Ansprüche, **dadurch gekennzeichnet, dass** die zusätzlichen Öle ausgewählt sind aus der Gruppe bestehend aus Leinöl, Leinöl-Standöl und/oder Leinöl-Holzöl-Standöl.

5. Spachtelmasse nach einem der vorhergehenden Ansprüche, **dadurch gekennzeichnet, dass** das Bindemittel zusätzlich wasserverdünnbare und/oder wasseremulgierbare Acrylsäurederivate, Methacrylsäurederivate, Polyurethane und/oder Hybride aus Acrylsäurederivate bzw. Methacrylsäurederivate und Polyurethane enthält.

6. Spachtelmasse nach einem der vorhergehenden Ansprüche, **dadurch gekennzeichnet, dass** das Bindemittel berechnet als Feststoff in einer Gesamtmenge zwischen 3 und 50 Gew.-%, bevorzugt zwischen 5 und 36 Gew.-% bezüglich des Gesamtgewichtes der Spachtelmasse enthalten ist.

7. Spachtelmasse nach einem der vorhergehenden Ansprüche, **dadurch gekennzeichnet, dass** der Gewichtsanteil an Wasser bezüglich der Gesamtzusammensetzung zwischen 10 und 50 Gew.-%, bevorzugt zwischen 12 und 35 Gew.-%, besonders bevorzugt zwischen 16 und 35 Gew.-% beträgt.

8. Spachtelmasse nach einem der vorhergehenden Ansprüche, **dadurch gekennzeichnet, dass** der mindestens eine Füllstoff ausgewählt ist aus der Gruppe bestehend aus Talkum, Calciumcarbonat, Dolomit, Schwerspat, Silikaten, Glaskugeln, Fasern, Cellulosefasern, Kaolin und/oder Pigmenten.

9. Spachtelmasse nach vorhergehendem Anspruch, **dadurch gekennzeichnet, dass** das mindestens eine Pigment ausgewählt ist aus der Gruppe bestehend aus anorganischen Pigmenten, z.B. Titandioxid und/oder Eisenoxiden und/oder organischen Pigmenten.

10. Spachtelmasse nach einem der vorhergehenden Ansprüche, **dadurch gekennzeichnet, dass** der Gewichtsanteil des mindestens einen Füllstoffs bezüglich der Gesamtzusammensetzung zwischen 10 Gew.-% und 80 Gew.-%, bevorzugt zwischen 30 Gew.-% und 70 Gew.-%, besonders bevorzugt zwischen 46 Gew.-% und 66 Gew.-% beträgt.

11. Spachtelmasse nach einem der vorhergehenden Ansprüche, **dadurch gekennzeichnet, dass** zusätzlich mindestens ein Verdicker, ausgewählt aus der Gruppe bestehend aus Acrylatverdickern, PU-Verdickern, Celluloseverdickern, Schichtsilikatverdickern und/oder Mischungen hieraus, enthalten ist.

12. Spachtelmasse nach vorhergehendem Anspruch, **dadurch gekennzeichnet, dass** der mindestens eine Verdicker in einem Gewichtsanteil bis zu 8 Gew.-%, bevorzugt bis zu 5 Gew.-%, besonders bevorzugt bis zu 3 Gew.-% bezüglich der Gesamtzusammensetzung enthalten ist.

13. Spachtelmasse nach einem der vorhergehenden Ansprüche, **dadurch gekennzeichnet, dass** zusätzlich mindestens ein Lösungsmittel, z.B. Propylenglykol, Butyldiglykol, und/oder Mischungen hieraus, enthalten ist.

14. Spachtelmasse nach vorhergehendem Anspruch, **dadurch gekennzeichnet, dass** das Lösungsmittel in einem Gewichtsanteil bis zu 10 Gew.-%, bevorzugt bis zu 7,5 Gew.-%, besonders bevorzugt bis zu 5 Gew.-% bezüglich der Gesamtzusammensetzung enthalten ist.

15. Spachtelmasse nach einem der vorhergehenden Ansprüche, **dadurch gekennzeichnet, dass** zusätzlich mindestens ein weiteres Additiv, ausgewählt aus der Gruppe bestehend aus Sikkativen, Hautverhütungsmitteln, Neutralisierungsmitteln, Entschäumern, Filmbildehilfsmitteln, Netzmitteln, Dispergiermitteln, Paraffinwachsen, Konservierungsmitteln, pyrogene Kieselsäuren und/oder Entlüftern enthalten ist.

16. Spachtelmasse nach vorhergehendem Anspruch, **dadurch gekennzeichnet, dass** das mindestens eine weitere Additiv in einem Gewichtsanteil bis zu 5 Gew.-%, bevorzugt bis zu 3 Gew.-%, besonders bevorzugt zwischen 0,2 Gew.-% und 2 Gew.-% bezüglich der Gesamtzusammensetzung enthalten ist.

17. Spachtelmasse nach einem der vorhergehenden Ansprüche mit einer Gesamtformulierung, enthaltend
| | | | |
|---|---|---|---|
| a) | Bindemittel: | 5 bis | 36 Gew.-%, |
| b) | Wasser: | 12 bis | 35 Gew.-%, |
| c) | Füllstoff: | 30 bis | 70 Gew.-%, |
| d) | Verdicker: | 0 bis | 5 Gew.-% |
| e) | Lösungsmittel: | 0 bis | 7,5 Gew.-%, |
| f) | weiteres Additiv: | 0 bis | 3 Gew.-%, |
wobei die Komponenten a) bis f) so zu wählen sind, dass ihre Summe 100 Gew.-% ergibt.

18. Spachtelmasse nach Anspruch 17, mit einer Gesamtformulierung, enthaltend
| | | | |
|---|---|---|---|
| a) | Bindemittel: | 8 bis | 36 Gew.-%, |
| b) | Wasser: | 16 bis | 35 Gew.-%, |
| c) | Füllstoff: | 46 bis | 66 Gew.-%, |
| d) | Verdicker: | 0 bis | 3 Gew.-% |
| e) | Lösungsmittel: | 0 bis | 5 Gew.-%, |
| f) | weiteres Additiv: | 0,2 bis | 2 Gew.-%, |
wobei die Komponenten a) bis f) so zu wählen sind, dass ihre Summe 100 Gew.-% ergibt.

19. Spachtelmasse nach einem der vorhergehenden Ansprüche, **dadurch gekennzeichnet, dass** der Gewichtsanteil an flüchtigen organischen Verbindungen (VOC) maximal 50 g/L, bevorzugt maximal 40 g/L, besonders bevorzugt maximal 30 g/L (bestimmt nach ISO 11 890 Teil 2) beträgt.

20. Spachtelmasse nach einem der vorhergehenden Ansprüche, **dadurch gekennzeichnet, dass** sie eine Einkomponentenspachtelmasse ist.

21. Spachtelmasse nach einem der vorhergehenden Ansprüche, **dadurch gekennzeichnet, dass** die Trocknungszeit einer 0,4 mm dicken Schicht maximal 10 Std., bevorzugt maximal 8 Std. beträgt.

22. Verwendung der Spachtelmasse nach einem der vorhergehenden Ansprüche zur flächendeckenden Applikation (Flächenspachtel) und/oder Ausbesserung von Fehlstellen (Fleckspachtel).

23. Verwendung der Spachtelmasse nach einem der Ansprüche 1 bis 21 zur Vorbereitung von Oberflächen für eine nachfolgende Lackierung.

## Claims

1. Environmentally-friendly filling paste containing a binding agent, water and at least one filling material, wherein the binding agent is at least one water-dilutable and/or water-emulsifying alkyd resin selected from mid-oil alkyd resins (oil length of between 40 and 60%) and/or short-oil alkyd resins (oil length of less than 40%),
with the following total formulation:
| | | |
|---|---|---|
| a) | binding agent: | 3 to 50 weight%, |
| b) | water: | 10 to 50 weight%, |
| c) | filling material: | 10 to 80 weight%, |
| d) | thickener: | 0 to 8 weight%, |
| e) | solvent: | 0 to 10 weight%, |
| f) | additional additive: | 0 to 5 weight%, |
wherein the components a) to f) are to be selected so that their overall weight% is 100%,
**characterised in that**,
the binding agent additionally contains oils.

2. Filling paste according to the preceding claim, **characterised in that** the oil length of the at least one alkyd resin is between 18 and 60%, preferably between 18 and 40%, particularly preferably between 20 and 30% and ideally between 20 and 25%.

3. Filling paste according to one of the preceding claims, **characterised in that** the at least one alkyd resin is at least partially modified by acrylic acid derivatives, methacrylic acid derivatives, polyurethanes and/or hybrids from acrylic acid derivatives and/or methacrylic acid derivatives and polyurethanes.

4. Filling paste according to one of the preceding claims, **characterised in that** the additional oils are selected from the group consisting of linseed oil, linseed/stand oil and/or linseed/wood/stand oil.

5. Filling paste according to one of the preceding claims, **characterised in that** the binding agent additionally contains water-dilutable and/or water-emulsifying acrylic acid derivatives, methacrylic acid derivatives, polyurethanes and/or hybrids from acrylic acid derivatives and/or methacrylic acid derivatives and polyurethanes.

6. Filling paste according to one of the preceding claims, **characterised in that** the binding agent calculated as a solid comprises a total amount of between 3 and 50 weight% and preferably between 5 and 36 weight% compared to the overall weight of the filling paste.

7. Filling paste according to one of the preceding claims, **characterised in that** the weight proportion of water compared to the overall composition is between 10 and 50 weight%, preferably between 12 and 35 weight% and particularly preferably between 16 and 35 weight%.

8. Filling paste according to one of the preceding claims, **characterised in that** the at least one filling material is selected from the group consisting of talcum, calcium carbonate, dolomite, barium sulphate, silicates, crystal, fabrics, cellulose fabrics, kaolin and/or pigments.

9. Filling paste according to the preceding claim, **characterised in that** the at least one pigment is selected from the group consisting of inorganic pigments such as titanium dioxide and/or iron oxides and/or organic pigments.

10. Filling paste according to one of the preceding claims, **characterised in that** the weight proportion of the at least one filling material compared to the overall composition is between 10 weight% and 80 weight%, preferably between 30 weight% and 70 weight% and particularly preferably between 46 weight% and 66 weight%.

11. Filling paste according to one of the preceding claims, **characterised in that**, in addition, at least one thickener selected from the group consisting of acrylate thickeners, PU thickeners, cellulose thickeners, sheet silicate thickeners and/or mixtures thereof is contained.

12. Filling paste according to the preceding claim, **characterised in that** the at least one thickener is contained in a weight proportion of up to 8 weight%, preferably up to 5 weight% and particularly preferably up to 3 weight% compared to the overall composition.

13. Filling paste according to the one of the preceding claims, **characterised in that**, in addition, at least one solvent is contained, such as propylene glycol, butyl diglycol and/or mixtures thereof.

14. Filling paste according to one of the preceding claims, **characterised in that** the solvent is contained in a weight proportion of up to 10 weight%, preferably up to 7.5 weight% and particularly preferably up to 5 weight% compared to the overall composition.

15. Filling paste according to one of the preceding claims, **characterised in that**, in addition, at least one further additive selected from the group consisting of desiccants, anti-skinning agents, neutralising agents, anti-foaming agents, coalescing agents, surfactants, dispersants, paraffin waxes, conservation agents, pyrogenic silica and/or aspirators is contained.

16. Filling paste according to the preceding claim, **characterised in that** the at least one further additive is contained in a weight proportion of up to 5 weight%, preferably up to 3 weight% and particularly preferably between 0.2 and 2 weight% compared to the overall composition.

17. Filling paste according to one of the preceding claims with a total formulation containing:
| | | |
|---|---|---|
| a) | binding agent: | 5 to 36 weight%, |
| b) | water: | 12 to 35 weight%, |
| c) | filling material: | 30 to 70 weight%, |
| d) | thickener: | 0 to 5 weight%, |
| e) | solvent: | 0 to 7.5 weight%, |
| f) | additional additive: | 0 to 3 weight%, |
wherein the components a) to f) are to be selected so that their overall weight% is 100%.

18. Filling paste according to Claim 17 with a total formulation containing:
| | | |
|---|---|---|
| a) | binding agent: | 8 to 36 weight%, |
| b) | water: | 16 to 35 weight%, |
| c) | filling material: | 46 to 66 weight%, |
| d) | thickener: | 0 to 3 weight%, |
| e) | solvent: | 0 to 5 weight%, |
| f) | additional additive: | 0.2 to 2 weight%, |
wherein the components a) to f) are to be selected so that their overall weight% is 100%.

19. Filling paste according to the preceding claims, **characterised in that** the weight proportion of volatile organic compounds (VOC) is 50g/l maximum, preferably 40g/l maximum and particularly preferably 30g/l maximum (defined according to ISO 11 890, section 2).

20. Filling paste according to one of the preceding claims, **characterised in that** it is a single-component filling paste.

21. Filling paste according to one of the preceding claims, **characterised in that** the drying time of a 0.4mm-wide coating is 10 hours maximum, preferably 8 hours maximum.

22. Use of the filling paste according to one of the preceding claims for surface-covering application
(surface filling) and/or repair of defects (defect filling).

23. Use of the filling paste according to one of claims 1 to 21 for the preparation of surfaces for a subsequent lacquering.

## Revendications

1. Enduit respectueux de l'environnement, contenant un liant, de l'eau ainsi qu'au moins une charge,
dans lequel le liant est au moins une résine alkyde diluable dans l'eau et/ou émulsifiable dans l'eau, choisie parmi les résines alkydes moyennes en huile (teneur en huile comprise entre 40 et 60 %) et/ou les résines alkydes courtes en huile (teneur en huile < 40 %), présentant la formulation totale suivante :
a) liant : 3 à 50 % en poids,
b) eau : 10 à 50 % en poids,
c) charge : 10 à 80 % en poids,
d) épaississant : 0 à 8 % en poids,
e) solvant : 0 à 10 % en poids,
f) additif supplémentaire : 0 à 5 % en poids,
dans lequel les composants a) à f) doivent être ainsi choisis que leur somme donne 100 % en poids,
**caractérisé en ce que**
le liant contient en outre des huiles.

2. Enduit selon la revendication précédente, **caractérisé en ce que** la teneur en huile de la au moins une résine alkyde est comprise entre 18 et 60 %, de préférence entre 18 et 40 %, de manière particulièrement préférée entre 20 et 30 %, de manière davantage préférée entre 20 et 25 %.

3. Enduit selon l'une quelconque des revendications précédentes, **caractérisé en ce que** la au moins une résine alkyde est modifiée au moins partiellement avec des dérivés d'acide acrylique, des dérivés d'acide méthacrylique, des polyuréthanes et/ou des hybrides de dérivés d'acide acrylique ou de dérivés d'acide méthacrylique et de polyuréthanes.

4. Enduit selon l'une quelconque des revendications précédentes, **caractérisé en ce que** les huiles supplémentaires sont choisies dans le groupe constitué par l'huile de lin, l'huile de lin-standolie et/ou l'huile de lin-huile de bois de Chine-standolie.

5. Enduit selon l'une quelconque des revendications précédentes, **caractérisé en ce que** le liant contient en outre des dérivés d'acide acrylique, des dérivés d'acide méthacrylique, des polyuréthanes et/ou des hybrides de dérivés d'acide acrylique ou de dérivés d'acide méthacrylique et de polyuréthanes, tous diluables dans l'eau et/ou émulsifiables dans l'eau.

6. Enduit selon l'une quelconque des revendications précédentes, **caractérisé en ce que** le liant calculé en tant que matière solide est contenu en une quantité totale comprise entre 3 et 50 % en poids, de préférence entre 5 et 36 % en poids, par rapport au poids total de l'enduit.

7. Enduit selon l'une quelconque des revendications précédentes, **caractérisé en ce que** la proportion en poids d'eau par rapport à la composition totale est comprise entre 10 et 50 % en poids, de préférence entre 12 et 35 % en poids, de manière particulièrement préférée entre 16 et 35 % en poids.

8. Enduit selon l'une quelconque des revendications précédentes, **caractérisé en ce que** la au moins une charge est choisie dans le groupe constitué par le talc en poudre, le carbonate de calcium, la dolomite, la baryte, les silicates, les billes de verre, les fibres, les fibres de cellulose, le kaolin et/ou les pigments.

9. Enduit selon la revendication précédente, **caractérisé en ce que** le au moins un pigment est choisi dans le groupe constitué par les pigments inorganiques, p. ex. le dioxyde de titane et/ou les oxydes de fer, et/ou les pigments organiques.

10. Enduit selon l'une quelconque des revendications précédentes, **caractérisé en ce que** la proportion en poids de la au moins une charge par rapport à la composition totale est comprise entre 10 % en poids et 80 % en poids, de préférence entre 30 % en poids et 70 % en poids, de manière particulièrement préférée entre 46 % en poids et 66 % en poids.

11. Enduit selon l'une quelconque des revendications précédentes, **caractérisé en ce qu'**est en outre contenu au moins un épaississant, choisi dans le groupe constitué par les épaississants acrylates, les épaississants PU, les épaississants cellulosiques, les épaississants silicates en feuillets et/ou leurs mélanges.

12. Enduit selon la revendication précédente, **caractérisé en ce que** le au moins un épaississant est contenu en une proportion en poids de jusqu'à 8 % en poids, de préférence de jusqu'à 5 % en poids, de manière particulièrement préférée de jusqu'à 3 % en poids, par rapport à la composition totale.

13. Enduit selon l'une quelconque des revendications précédentes, **caractérisé en ce qu'**est en outre contenu au moins un solvant, p. ex. le propylène glycol, le butyldiglycol et/ou leurs mélanges.

14. Enduit selon la revendication précédente, **caractérisé en ce que** le solvant est contenu en une proportion en poids de jusqu'à 10 % en poids, de préférence de jusqu'à 7,5 % en poids, de manière particulièrement préférée de jusqu'à 5 % en poids, par rapport à la composition totale.

15. Enduit selon l'une quelconque des revendications précédentes, **caractérisé en ce qu'**est en outre contenu au moins un additif supplémentaire, choisi dans le groupe constitué par les siccatifs, les agents antipeaux, les agents de neutralisation, les antimousses, les adjuvants filmogènes, les agents mouillants, les agents dispersants, les cires de paraffine, les conservateurs, les silices pyrogénées et/ou les exhausteurs.

16. Enduit selon la revendication précédente, **caractérisé en ce que** le au moins un additif supplémentaire est contenu en une proportion en poids de jusqu'à 5 % en poids, de préférence de jusqu'à 3 % en poids, de manière particulièrement préférée comprise entre 0,2 % en poids et 2 % en poids, par rapport à la composition totale.

17. Enduit selon l'une quelconque des revendications précédentes, avec une formulation totale contenant :
a) liant : 5 à 36 % en poids,
b) eau : 12 à 35 % en poids,
c) charge : 30 à 70 % en poids,
d) épaississant : 0 à 5 % en poids,
e) solvant : 0 à 7,5 % en poids,
f) additif supplémentaire : 0 à 3 % en poids,
dans lequel les composants a) à f) doivent être ainsi choisis que leur somme donne 100 % en poids.

18. Enduit selon la revendication 17, avec une formulation totale contenant :
a) liant : 8 à 36 % en poids,
b) eau : 16 à 35 % en poids,
c) charge : 46 à 66 % en poids,
d) épaississant : 0 à 3 % en poids,
e) solvant : 0 à 5 % en poids,
f) additif supplémentaire : 0,2 à 2 % en poids,
dans lequel les composants a) à f) doivent être ainsi choisis que leur somme donne 100 % en poids.

19. Enduit selon l'une quelconque des revendications précédentes, **caractérisé en ce que** la proportion en poids de composés organiques volatils (COV) s'élève au plus à 50 g/L, de préférence au plus à 40 g/L, de manière particulièrement préférée au plus à 30 g/L (déterminée selon la norme ISO 11 890 partie 2).

20. Enduit selon l'une quelconque des revendications précédentes, **caractérisé en ce qu'**il s'agit d'un enduit monocomposant.

21. Enduit selon l'une quelconque des revendications précédentes, **caractérisé en ce que** temps de séchage d'une couche d'une épaisseur de 0,4 mm s'élève au plus à 10 h, de préférence au plus à 8 h.

22. Utilisation de l'enduit selon l'une quelconque des revendications précédentes pour l'application en recouvrement d'une surface (revêtement de surface) et/ou pour l'amélioration de défauts (revêtement localisé).

23. Utilisation de l'enduit selon l'une quelconque des revendications 1 à 21 pour le pré-conditionnement de surfaces pour un laquage ultérieur.
